(19) **Europäisches Patentamt**
**European Patent Office**
**Office européen des brevets**

(11) **EP 1 347 944 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(51) Int Cl.:
***C03B 17/06*** *(2006.01)*

(21) Anmeldenummer: **01985876.0**

(86) Internationale Anmeldenummer:
**PCT/EP2001/014654**

(22) Anmeldetag: **13.12.2001**

(87) Internationale Veröffentlichungsnummer:
**WO 2002/051757 (04.07.2002 Gazette 2002/27)**

(54) **VERFAHREN UND VORRICHTUNG ZUR HERSTELLUNG VON DÜNNEN GLASSCHEIBEN**

METHOD AND DEVICE FOR PRODUCING THIN GLASS PANES

PROCEDE ET DISPOSITIF POUR LA PRODUCTION DE PLAQUES DE VERRE DE FAIBLE EPAISSEUR

(84) Benannte Vertragsstaaten:
**CH DE FR GB IT LI NL**

(30) Priorität: **23.12.2000 DE 10064977**

(43) Veröffentlichungstag der Anmeldung:
**01.10.2003 Patentblatt 2003/40**

(73) Patentinhaber: **Schott AG**
**55122 Mainz (DE)**

(72) Erfinder:
• **MÜLLER, Rudolf**
**55411 Bingen (DE)**
• **LOCH, Horst**
**65527 Niedernhausen (DE)**
• **SPRENGER, Dirk**
**55271 Stadecken-Elsheim (DE)**

• **ZIMMER, Jose**
**55218 Ingelheim (DE)**
• **WEGENER, Holger**
**31061 Alfed (DE)**

(74) Vertreter: **Fuchs**
**Patentanwälte**
**Postfach 46 60**
**65036 Wiesbaden (DE)**

(56) Entgegenhaltungen:
**EP-A- 1 048 621       WO-A-00/66507**
**DE-B- 1 596 484**

• **PATENT ABSTRACTS OF JAPAN vol. 014, no. 522 (C-0778), 15. November 1990 (1990-11-15) & JP 02 217327 A (NIPPON ELECTRIC GLASS CO LTD), 30. August 1990 (1990-08-30) in der Anmeldung erwähnt**

EP 1 347 944 B1

**Beschreibung**

Die Erfindung betrifft ein Verfahren zum Herstellen von dünnen Glasscheiben, insbesondere von Glasscheiben mit einer Dicke unter 3 mm, vorzugsweise unter 1 mm, durch Ziehen eines dünnen Glasbandes vertikal nach unten, bei dem aus einer Schmelzwanne über einen Zulauf eine Glasschmelze einem Ziehtank mit einem mindestens eine Ziehdüse aufweisenden Düsensystem zugeführt wird. Die Erfindung betrifft auch eine Vorrichtung gemäß dem Oberbegriff des Patentanspruchs 15.

Solche Dünnglasscheiben werden als Substratglas bei elektronischen Geräten, wie z.B. für Displays (tragbare Telefone, Flachbildschirme etc.) und digitalen Massenspeichern von Rechnern, eingesetzt. Deshalb sind höchste Anforderungen an die innere Qualität des Glases, die im wesentlichen durch Blasen und Einschlüsse bestimmt wird, an die Sauberkeit, an die Qualität der Oberflächengeometrie, die im wesentlichen durch die Feinwelligkeit (Waviness) und durch die Abweichungen von der Ebenheit (Warp) bestimmt wird, an die Bruchfestigkeit und gegebenenfalls an das geringe Gewicht zu stellen.

Bei der Verwendung als Substratglas für Displays durchlaufen die Gläser beim Kunden einen thermischen Fertigungsprozess nahe der Glasübergangstemperatur. Dabei muss die Formstabilität der Glassubstrate erhalten bleiben. Deshalb werden als Substratgläser Spezialgläser oder auch Glaskeramiken mit erhöhten Glasübergangstemperaturen eingesetzt, die meist eine erhöhte Kristallisationsneigung sowie einen untypischen Viskositätsverlauf in Abhängigkeit von der Temperatur aufweisen. Somit erfordern diese Gläser höhere Verarbeitungstemperaturen als die Standardgläser.

Da es sich bei diesen Anwendungen um Massenprodukte handelt, müssen die Glasscheiben möglichst kostengünstig gefertigt werden. D.h. eine hohe Prozeßstabilität mit geringen Rüst- und Stillstandszeiten bei hohen Durchsätzen und niedrigem Verschnitt, die durch Glasfehler und im Bortenbereich verursacht werden, ist anzustreben. Außerdem sind die Kundenanforderungen bezüglich der Sauberkeit der Oberfläche und der Qualität der Oberflächengeometrie weitgehend zu erfüllen, so daß die kostenaufwendigen Prozeßschritte der Nachverarbeitung, wie z.B. Schleifen und Polieren entfallen oder reduziert werden können.

Bei den bisher bekannten Ziehverfahren werden die oben genannten Anforderungen bezüglich der Produktqualität und der Wirtschaftlichkeit nur zum Teil erfüllt.

Bei den Herstellungsverfahren unterscheidet man zwischen Ziehverfahren mit und ohne Ziehdüse.

Bei dem Ziehverfahren ohne Ziehdüse, wie dies beispielsweise in der US 3,338,696 beschrieben wird, wird ein Trog verwendet, in den die Glasschmelze eingeleitet wird. Die Glasschmelze tritt über die Oberkante der Trogwände aus und läuft an den Außenseiten des keilförmigen Troges nach unten. Im Scheitelpunkt fließen die so gebildeten Glasfilme zusammen und werden nach unten abgezogen. Der keramische Trog ist zur Verminderung der Korrosion mit Platin verkleidet.

Bei diesen Verfahren wird der Gesamtdurchsatz im wesentlichen durch den Zulauf zwischen Schmelzwanne und Trog bestimmt. Der sogenannte Liniendurchsatz, worunter der Durchsatz pro Längeneinheit quer zur Ziehrichtung des Glasbandes verstanden wird, wird durch den Glasfluß im Trog, den Glasstand im Bereich der Überlaufkante des Troges, durch die Geometrie der Überlaufkante und durch die Zähigkeit des Glases eingestellt. Eine sehr exakte Temperaturregelung ist notwendig, die unter 0,1°C liegen muß.

Format- oder Durchsatzänderungen fordern eine Anpassung der Geometrie des Ziehtroges, insbesondere für den Glasfluß im Trog. Da das Anfahren eines neuen Ziehtroges bis zu einer Woche oder mehr dauert, ist die gewünschte Flexibilität der Fertigung somit nur eingeschränkt gegeben.

Die Korrosion der Trogkanten kann nicht durch Kippen oder Strecken des Troges kompensiert werden. Der Trog muß ersetzt und der Prozeß muß wieder angefahren werden.

Zur Einstellung eines breiten Glasbandes mit schmalen Borten muß das Glasband durch sogenannte Bortenroller im Randbereich quer zur Bandrichtung gestreckt werden. Die Bortenroller erhöhen die Komplexität des Fertigungsprozesses.

Bei den Ziehverfahren mit Schlitzdüse unterscheidet man solche mit und ohne Leit- oder Verdrängungskörper.

Bei dem beispielsweise in SU 617.390 beschriebenen Verfahren mit einer Schlitzdüse ohne Leitkörper läuft das Glas aus der Arbeits- oder Abstehwanne beidseits über die gegeneinander gerichteten Wände eines Überlaufs aus feuerfestem Material ab. Die beiden so entstehenden Glasfilme fließen oberhalb einer Düse zusammen und werden anschließend nach unten abgezogen. Die Regelung des Durchsatzes erfolgt über die Glasstandshöhe an den Überlaufkanten. Dies kann entweder durch eine Änderung des Glasstandes in der Arbeitswanne oder aber durch ein tieferes Eintauchen des Überlaufsteins geschehen.

Mit dem Verfahren mit Schlitzdüse ohne Leitkörper können die erhöhten Anforderungen an die Oberflächenqualität, insbesondere an die Feinwelligkeit (Waviness) nicht erfüllt werden. Aufgrund der kurzen Verweilzeiten des Glases im Ziehzwiebelbereich und aufgrund der hohen Zähigkeit des Glases heilen die Unebenheiten nicht aus.

Bestimmte Verarbeitungstemperaturen dürfen wegen der Zunahme der Instabilitäten im Ziehzwiebelbereich bei Unterschreitung kritischer Zähigkeiten der Glasschmelze ebenfalls nicht überschritten werden. Somit können Spezialgläser mit erhöhter Kristallisationsneigung mit den bekannten Ziehverfahren ohne Leitkörper nicht gefertigt werden.

Durch den Einsatz einer Schlitzdüse mit Innenleitkörper werden die oben beschriebenen Nachteile zum Teil vermieden.

In der US 1,759,229 wird ein Ziehverfahren zur Herstellung von Flachglas beschrieben, bei dem Glas durch eine im Boden einer Arbeits- oder Abstehwanne angebrachte Schlitzdüse auf einen Verdrängungskörper mit rombenförmigem Querschnitt fließt und über diesen nach unten abgezogen wird. Der Verdrängungskörper ist unterhalb der Schlitzdüse in eine sich nach unten aufweitende Aussparung eingepaßt. Die Glasbadtiefe der Arbeits- oder Abstehwanne nimmt zu den Enden der Schlitzdüse zu. Sowohl die Düse als auch der Verdrängungskörper können konturiert sein. Wesentlich ist hierbei, daß der Düsenschlitz sich zu den Rändern verbreitert sowie daß der eingesetzte, ausrichtbare Verdrängungskörper in der Mitte nach oben gebogen sein kann.

Der untere, keilförmige Teil des Verdrängungskörpers ist mit einer Einhausung versehen, in der quer zur Ziehrichtung angebrachte Heiz- oder Kühlelemente vorhanden sein können. Die Temperaturen des Verdrängungskörpers können durch Strömungen der Temperiermedien eingestellt werden.

Der Glasfluß wird über die Geometrie der Düse und des Verdrängungskörpers, das durch das in der Arbeits- oder Abstehwanne vorhandene Temperaturniveau und Profil sowie die Position des Verdrängungskörpers relativ zur Düse beeinflußt. Der Verdrängungskörper hat unter anderem die Aufgabe, die Temperaturen des Glases quer zur Ziehrichtung zu vergleichmäßigen, damit Flachglas mit vorgegebenen Abmessungen und einem gleichmäßigen Erscheinungsbild hergestellt wird.

Aus der DE-AS 15 96 484 ist eine Vorrichtung bekannt, die einen Homogenisierungsbehälter umfaßt, der über eine geschlossene und beheizbare Rinne mit einem Ziehofen verbunden ist. Der Ziehofen ist mit einer aus Platin gefertigten, mit einem unteren Schlitz versehenen Düse ausgestattet. Unterhalb der Düse ist ein Leitkörper in Form einer vertikal angeordneten Platte vorgesehen. Die aus der Düse austretende Glasschmelze läuft beidseitig an dem Leitkörper herunter und vereinigt sich am unteren Ende zu einem Glasband.

Zur Wärmeabfuhr von innen sind in dem Leitkörper Bohrungen vorgesehen, durch die Kühlmittel geführt werden kann. Ferner sind an dem unteren Teil des Leitkörpers außen Kühlkörper angebracht. Mittels Stellschrauben ist der Leitkörper in der Höhe verstellbar.

In JP 2-217.327 wird eine Vorrichtung zum Herstellen von Flachglas beschrieben, bei der das Glas durch eine im Boden eines Speisers oder einer Arbeitswanne angebrachten Schlitzes nach unten abgezogen wird. Die Schlitzdüse kann indirekt beheizt werden. Der Glaszufluß wird mit Hilfe eines oberhalb des Schlitzes befindlichen Plungers abgestoppt. Zur Stabilisierung des Glasbandes ist in der Ziehdüse ein plattenförmiger, an den Seiten gehaltener und der Lage justierbarer Innenleitkörper angeordnet, dessen oberer Abschnitt in die Ziehdüse hineinragt und dessen unterer Teil eingehaust ist.

Dieser aus der JP02-217 327 A und der DE 15 96 484 B bekannte Stand der Technik offenbart ein Verfahren, bei dem die Glasschmelze aus der Schmelzwanne über einen sich verjüngenden Zulauf der Düse zugeführt wird, so dass der statische Druck der Schmelzsäule oberhalb der Düse auf das Glas im Bereich der Düse einwirkt.

Die US 1,829,639 beschreibt ein Verfahren sowie eine Vorrichtung, bei der der Gesamtdurchsatz und der Liniendurchsatz nur durch die Geometrie des Düsensystems, die Viskosität der Glasschmelze im Bereich der Düse und durch den Druck der Glasschmelze über der Düse eingestellt wird. Die Glasschmelze weist beim Austritt an der Düse nur einen geringen Überdruck aufgrund des offenen Speichersystems mit einer geringen Glas-Füllstandshöhe auf. Der wesentliche Nachteil dieser Vorrichtung bzw. dieses Verfahrens liegt in der Kopplung von Gesamtdurchsatz und Liniendurchsatz.

Mit den bekannten Verfahren mit Schlitzdüse und Leitkörper können nicht die hervorragenden Oberflächenqualitäten wie bei den bekannten Ziehverfahren ohne Schlitzdüse erreicht werden. Insbesondere bei hohen Liniendurchsätzen und hohen Verarbeitungstemperaturen reichen die Verweilzeiten des Glasfilms auf dem Leitkörper nicht aus, die Feinwelligkeit der Oberfläche auszuheilen, die durch die Benetzung der Düse im Bereich der Abrisskante verursacht wurde.

Bei dem bekannten Verfahren mit Schlitzdüse mit und ohne Leitkörper sind die Einstellungen des Gesamtdurchsatzes und die Einstellung des Liniendurchsatzes (Dickenverteilung quer zur Zielrichtung) miteinander gekoppelt.

Bei Format- oder Durchsatzänderungen ist die Düsengeometrie und die Temperaturführung im Bereich der Düse immer wieder neu, im allgemeinen empirisch einzustellen. Die Anfahrprozesse dauern lange und die gewünschte Flexibilität der Fertigung ist nur eingeschränkt gegeben.

Zur Einstellung der spezifikationsgerechten Dickenverteilung sind definierte Temperaturprofile quer zur Ziehrichtung im Bereich der Düse einzustellen. Die dem Glasband aufgeprägten Temperaturprofile können bis zur Feinkühlzone nur teilweise ausgeglichen werden. Dies kann zu einer unzulässigen Verformung des Glasbandes (Warp) bei der Abkühlung auf Raumtemperatur führen.

Die Aufgabe der Erfindung besteht darin, ein Verfahren bereitzustellen, mit dem u.a. Gläser mit starker Kristallisationsneigung oder Glaskeramiken verarbeitet werden können, wobei die Qualität der dünnen Glasscheiben verbes-sert und die Produktivität gesteigert werden soll. Es ist auch Aufgabe der Erfindung, eine Vorrichtung zur Durchführung des Verfahrens bereitzustellen.

Diese Aufgabe wird mit einem Verfahren gemäß der Merkmale des Patentanspruchs 1 gelöst.

Mit dem erfindungsgemäßen Verfahren werden die beschriebenen Anforderungen bezüglich der Produktqualität und der Wirtschaftlichkeit erfüllt.

Das Verfahren verbindet die Vorteile der Ziehverfahren mit Düse und die Vorteile der Ziehverfahren ohne Düse. Dies bedeutet, daß Glasdicken von 20 μm bis 3000 μm bei einer guten Dickenverteilung in Quer- und Ziehrichtung mit Dickenschwankungen < 20 μm und einer geringen Bortenbreite eingestellt werden können. Darüber hinaus wird eine hervorragende Oberflächenqualität erreicht, d.h. die Waviness liegt unter 20 nm. Außerdem ist der Warp äußerst niedrig. Es sind hohe Verarbeitungstemperaturen und niedrige Verarbeitungszähigkeiten (5 x 10³ bis 3 x 10⁴ dPas) zur Fertigung auch von kristallisationsempfindlichen Gläsern oder Glaskeramiken möglich. Ferner ist eine große Flexibilität bezüglich der Formate möglich, deren Breite zwischen 300 mm und 2000 mm eingestellt werden kann. Ferner sind hohe Liniendurchsätze (Masse Glas pro Bandbreite pro Zeit > 5 g/(mm x min) bei großer Prozeßstabilität erreichbar. Die Nachteile des Ziehverfahrens mit und ohne Düsen werden dagegen weitgehend vermieden.

Vorzugsweise ist der Zulauf, der Ziehtank und das Düsensystem ein geschlossenes System. Der Gesamtdurchsatz wird durch die Länge und den Querschnitt des Zulaufs sowie über die Viskosität der im Zulauf befindlichen Glasschmelze eingestellt. Andererseits wird der Durchsatz pro Längeneinheit in Querrichtung zum Glasband (Liniendurchsatz) zur definierten Dickeneinstellung durch die Geometrie des Düsensystems sowie über die Viskosität der Glasschmelze entlang der Düse eingestellt. Der Druck der Glasschmelze, der durch den Niveauunterschied zwischen der Höhe der freien Oberfläche der Glasschmelze und der Höhe des Düsensystems entsteht, fällt durch die erfindungsgemäßen Maßnahmen im wesentlichen im Zulauf ab. Der Druckabfall im Bereich des Düsensystems ist gering, so daß sich die Glasschmelze beim Austritt aus der Schlitzdüse nur unwesentlich aufweitet. Die Benetzung der Düse im Bereich der Abrißkante wird reduziert. Durch die reduzierende Benetzung der Schlitzdüse im Bereich der Abrißkante werden verbesserte Oberflächenqualitäten im Vergleich zu den bekannten Ziehverfahren mit Düsen erreicht.

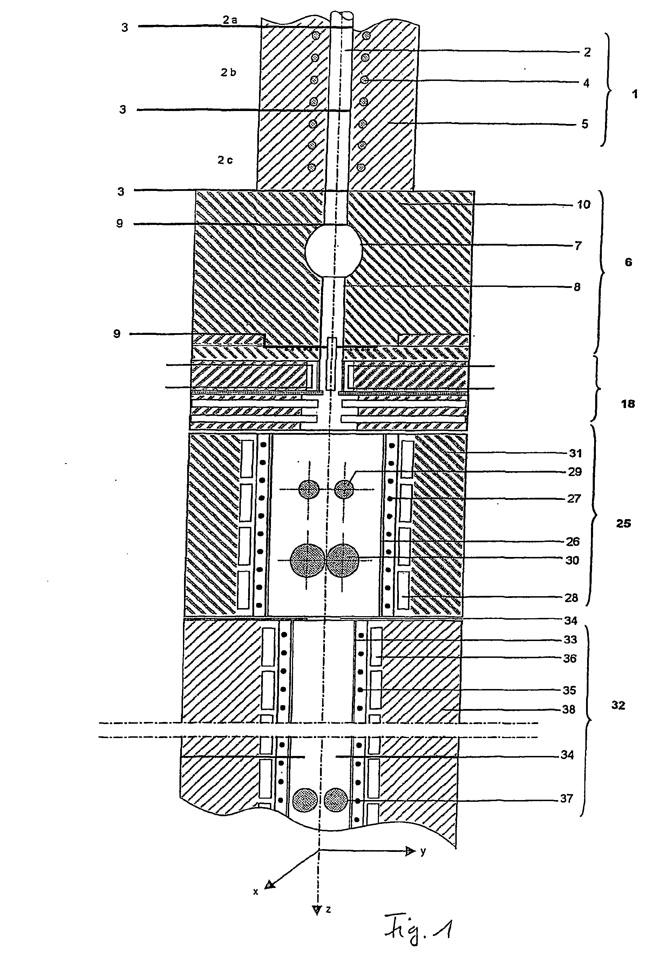

Erfindungsgemäß ist die Einstellung des Gesamtdurchsatzes von der Einstellung des Liniendurchsatzes weitgehend entkoppelt. Der Gesamtdurchsatz wird durch die definierte Beheizung und Kühlung des Zulaufs eingestellt. Der Liniendurchsatz und damit die Dickenverteilung quer zur Bandrichtung wird eingestellt durch die definierte Beheizung und Kühlung der Ziehtanksegmente, der Schlitzdüse und des Leitkörpers. Dies bedeutet, daß Änderungen des Druckabfalls im Bereich des Ziehtanks und der Düsen, z.B. verursacht durch Temperaturänderungen in diesem Bereich, den Gesamtdurchsatz nur unwesentlich beeinflussen. Damit wird die Stabilität des Gesamtdurchsatzes und damit die Konstanz der Dickenverteilung des Glasbandes in Z-Richtung (s. Koordinatensystem in Fig. 1) erhöht. Durch die Entkopplung der unterschiedlichen Prozeßschritte wird die Prozeßführung vereinfacht. Die Zeiten für Einfahrprozesse werden reduziert und die Flexibilität der Fertigung, z.B. Änderungen des Gesamtdurchsatzes oder Änderungen der Glasbanddicke, werden durch Erweiterungen der Prozeßfenster im Vergleich zu den bekannten Ziehverfahren erhöht. Die Anlagen müssen nicht jeweils den geänderten Geometrien des Glasbandes oder geänderten Prozeßparametern angepaßt werden.

Die folgenden Temperaturbereiche für Zulauf (ZL), Ziehtank (ZT) und Schlitzdüse (SD) haben sich für ein alkalifreies Borosilikatglas mit Tg ca. 700°C, Dichte ca. 2,5 g/cm³ und einer thermischen Ausdehnung von ca. 37 x 10⁻⁷/K als vorteilhaft herausgestellt:

$$T_{ZL1} = Tg + 670 \text{ K bis } T_{ZR2} = Tg + 590 \text{ K}$$

$$T_{ZT1} = Tg + 590 \text{ K bis } T_{ZT2} = Tg + 570 \text{ K}$$

$$T_{SD} = Tg + 570 \text{ K bis } Tg + 550 \text{ K}.$$

Hierbei bezeichnet Tg die Glasübergangstemperatur.

Obwohl das Verfahren auch ohne Leitkörper gute Ergebnisse bezüglich der Oberflächenqualität liefert, kann durch Einsatz eines Leitkörpers eine weitere Verbesserung erzielt werden. Der Glasschmelzefluß wird beim Durchlauf durch die Schlitzdüse mittels des Leitkörpers geteilt. Die Glasschmelze fließt beidseitig an dem Leitkörper nach unten. Die beiden Glasfilme schmelzen am unteren Ende des Leitkörpers wieder zu einem Glasband zusammen.

Vorzugsweise wird die Verweilzeit und die Viskosität der Glasfilme auf dem Leitkörper derart eingestellt, daß Abweichungen von der idealen Oberflächenkontur nahezu vollständig ausheilen. Um dies zu erreichen, werden die Glasfilme vorzugsweise selektiv am Leitkörper geheizt und/oder gekühlt.

Durch die lange Verweilzeit der beiden Glasfilme am Leitkörper bei geringer Zähigkeit des Glases heilen Abweichungen von der idealen Oberflächenkontur aufgrund der Oberflächenspannungen fast vollständig aus. Es wird eine Oberflächenqualität erreicht, die vergleichbar mit der Oberflächenqualität des düsenfreien Ziehverfahrens ist. (Waviness < 20 mm).

Dabei wird am Leitkörper (LK) vorzugsweise die folgende Temperatur eingestellt:

$$T_{LK} = Tg + 560 \text{ K bis } Tg + 540 \text{ K}.$$

Das entspricht einer Zähigkeit des Glases von $1 \times 10^4$ dPas.

Die Schlitzbreite zwischen der Schlitzdüse und dem Leitkörper kann beispielsweise jeweils 10 mm betragen. Die Dicke der beiden Glasfilme beträgt beispielsweise jeweils 8 mm. Das heißt, die beiden Glasfilme benetzen die Schlitzdüse von unten nicht.

Die Qualitätsanforderungen an die Geometrie der Abrißkante der Schlitzdüse sind im Vergleich zu bekannten Ziehverfahren mit Düse gering. Deshalb können die Düsen im Gegensatz zu den bekannten Ziehverfahren auch nach dem Abstoppen mehrmals eingesetzt werden. Die Fertigungskosten werden somit reduziert.

Aufgrund der Stabilisierung der Glasfilme durch den Leitkörper und der raschen Kühlung nach dem Verschmelzen der beiden Glasfilme in der Ziehzwiebel können die Verarbeitungstemperaturen deutlich höher ($\geq$ 100 K) als bei den Ziehverfahren mit Düse ohne Leitkörper gewählt werden und sind somit vergleichbar mit den Verarbeitungstemperaturen in den düsenfreien Ziehverfahren. Die Erhöhung der Verarbeitungstemperaturen ermöglicht die Fertigung von Spezialgläsern mit starker Kristallisationsneigung oder von Glaskeramiken.

Das Glasband wird im Bereich der Ziehzwiebel vorzugsweise selektiv gekühlt.

Durch die Stabilisierung der Glasfilme durch den Leitkörper und der schnellen Abkühlung des Glases im Bereich der Ziehzwiebel ist die Glasmasse im Bereich der Ziehzwiebel gering. Damit können Liniendurchsätze bis zu 5 g/(mm x min) bei hoher Prozeßstabilität eingestellt werden. Bei den oben angegebenen Temperatureinstellungen werden z.B. Liniendurchsätze von 3,5 g/ (mm x min) erreicht. Hierdurch wird die Produktivität entscheidend verbessert.

Vorzugsweise wird die Temperaturabweichung $\Delta T_{SD}$ der Glasschmelze längs der Schlitzdüse auf $\Delta T_{SD} \leq 20$ K eingestellt. Die Temperatur ist im Gegensatz zu dem bekannten Ziehverfahren mit Düse im Bereich der Düse deutlich homogener. Die Schrumpfrate des Glasbandes ist somit während des Abkühlprozesses in Ziehrichtung quer zum Glasband gleichmäßiger als bei den bisher bekannten Ziehverfahren mit Düse. Die Verformung des Glasbandes (Warp) bei der Abkühlung auf Raumtemperatur wird dadurch deutlich reduziert. Damit können Dünnglasscheiben mit hohen Qualitätsforderungen an die Planität hergestellt werden.

Vorzugsweise werden die Glasfilme an ihren Seitenrändern seitlich geführt. Durch die Seitenbegrenzung des Leitkörpers und durch die Temperaturführung im Bereich der Kühlsysteme des Düsenofens kann der Prozeß so geführt werden, daß die Breite der Borten und somit die Glasverluste hinreichend klein sind. Auf eine inhomogene Temperaturführung im Düsenbereich und auf Bortenroller, zur Einstellung der gewünschten Breite, kann verzichtet werden. Durch die Verbesserung der Ausbeute wird die Produktivität erhöht.

Im Düsenofen wird das Glas im Bereich der Ziehzwiebel durch den Hauptkühler auf eine Temperatur von beispielsweise ca. Tg + 290 K abgekühlt.

Geringe Inhomogenitäten des Liniendurchsatzes führen ggf. zu kleinen Dickenschwankungen quer zur Ziehrichtung des Glasbandes. Erfindungsgemäß kann die Dickenverteilung durch das in X-Richtung segmentierte Kühlsystem des Düsenofens unterhalb des Hauptkühlers korrigiert werden. Dazu werden bei Bedarf verschiedene Zonen des Glasbandes geringfügig unterschiedlich abgekühlt, so daß die Verstreckung des Glasbandes in Z-Richtung für heißere Glaszonen größer ist als für kältere Glaszonen. Damit wird bei der Verstreckung des Glasbandes die Reduzierung der Dicke der kälteren Zonen im Vergleich zur Reduzierung der Dicke der wärmeren Zonen moderat verringert. Im Düsenofen können durch die segmentierten Heiz- und Kühlelemente somit definierte Temperaturprofile in Bandrichtung und quer zur Bandrichtung eingestellt werden. Die Ausbeute bezüglich des Qualitätsmerkmals Dickenverteilung wird somit erhöht.

Vorrichtungsmäßig wird das Glasband bei Bedarf im viskoseelastischen Zustand durch Walzen oder Rollen unter dem Düsenofen quer zur Bandrichtung so gestreckt, daß das Glasband plan und spannungsfrei den im Ziehschacht befindlichen Kühleinrichtungen zugeführt wird. Dadurch können ggf. Abweichungen von der Planität, die im Heißformgebungsbereich verursacht wurden, korrigiert werden. Außerdem wird durch die Walzen oder Rollen der Durchgriff der Verformung aus dem elastischen Bereich im Heißformbereich verhindert. Die Walzen oder Rollen befinden sich in einem Walzenofen oder im Ziehschacht, in dem durch segmentierte Heiz- und Kühlelemente definierte Temperaturprofile in Bandrichtung quer zur Bandrichtung eingestellt werden können. Dadurch wird die Ausbeute bezüglich des Qualitätsmerkmals Warp erhöht.

Erfindungsgemäß wird das Glasband mit Ziehwalzen unter dem Düsenofen vertikal nach unten gezogen. Dabei wird das Glasband durch die Ziehwalzen mit einer Geschwindigkeit von z.B. 1,6 m/min so verstreckt, daß bei einem Liniendurchsatz von 3,5 g (min x mm) und einem Bruttobereich von ca. 800 mm ein Glasband mit einer Dicke im Nettobereich von 0,7 mm entsteht. Vorzugsweise wird die Dicke des Glasbandes kontinuierlich gemessen, wobei mittels der gemessenen Dickenwerte die Ziehgeschwindigkeit gesteuert wird.

Ggf. kann die Ziehgeschwindigkeit entsprechend der nach der Kühlung des Glases durchgeführten Onlinedickenmessung geregelt werden. Dadurch wird die Ausbeute bezüglich des Qualitätsmerkmals mittlerer Dicken erhöht.

Falls bei großen Banddicken, d.h. großen Bandgewicht und geringe Ziehkraft, die notwendigen Ziehkräfte zur Einstellung der geforderten Dicke kleiner sind als das Bandgewicht, können die Ziehwalzen einen Teil des Bandgewichtes kompensieren. Sie sind dann bevorzugt im Walzenofen oder im Ziehschacht anzuordnen.

Das Glasband wird gemäß einer weiteren Ausführungsform im Walzenofen und/oder im Ziehschacht in Bandrichtung und quer zur Bandrichtung selektiv geheizt und/oder gekühlt.

In der 1. Schnellkühlzone wird das Glasband vorzugsweise auf Tg + 50°K. abgekühlt, dann in die Feinkühlzone zur Einstellung der Kühlkörperspannung auf beispielsweise Tg - 50 K feingekühlt und in der Schnellkühlzone rasch auf beispielsweise 450 K abgekühlt.

Bevorzugte Verwendungen der nach dem Verfahren hergestellten Glasscheiben sind Substratgläser in elektronischen Geräten wie z.B. Displays (tragbare Telefone, Flachbildschirme, etc.) oder Substratgläser für Massenspeicher von Rechnern.

Vorrichtungsmäßig wird die Aufgabe dadurch gelöst, dass der Zulauf, der Ziehtank und das Düsensystem ein geschlossenes System bilden, bei dem der Druck der Glasschmelze, der durch den Niveauunterschied zwischen der Höhe der freien Oberfläche der Glasschmelze und der Höhe des Düsensystems entsteht, im wesentlichen im Zulauf abfällt, dass der Zulauf als vertikal angeordnetes Rohr mit segmentierten Rohrabschnitten ausgebildet ist, wobei das Rohr eine Länge von 2 bis 5 m und einen Querschnitt von 50 mm bis 80 mm aufweist, wobei der Rohrquerschnitt eine Kreisform aufweist, dass der Zulauf eine segmentierte Beheizungs- und Kühleinrichtung aufweist, und dass der Ziehtank ein in vertikaler Richtung und in Querrichtung segmentiertes Beheizungssystem aufweist.

Der Zulauf kann aus einer Platinlegierung oder aus ff-Material (Feuerfest-Material) bestehen und segmentierte direkte oder indirekt beheizte oder gekühlte Rohrabschnitte aufweisen.

Im Rohr wird der benötigte Zähigkeitsverlauf des Glases durch die Kombination der Beheizung und Kühlung eingestellt. Am Ende des Zulaufs wird das Glas in den Ziehtank eingespeist.

Im Ziehtank wird die Glasschmelze quer zur Ziehrichtung gleichmäßig verteilt. Der Ziehtank ist ein Behältnis aus vorzugsweise einer Platinlegierung, in dem der geforderte Zähigkeitsverlauf des Glases durch eine Kombination der Beheizung und Kühlung eingestellt wird. Das Glas wird unterhalb des Ziehtanks dem Düsensystem zugeführt.

Das Düsensystem weist vorzugsweise eine bzw. zwei Schlitzdüsen und gegebenenfalls einen Leitkörper aus einer Platinlegierung auf. Die Schlitzdüsen weisen vorzugsweise eine Heizung auf. Der Leitkörper kann eine nach unten spitz zulaufende Platte aus einer Platinlegierung sein und weist vorzugsweise eine Heizung und bei Bedarf eine Kühlung auf. Die Einstellung des homogenen Liniendurchsatzes erfolgt durch die definierte Beheizung und Kühlung des Ziehtanks, der Schlitzdüse und des Leitkörpers.

Der Leitkörper ist vertikal in der Schlitzdüse angeordnet und ragt vorzugsweise durch den Schlitz der Schlitzdüse in den Ziehtank. Der Glasfluß wird durch den Leitkörper schon im Ziehtank in Y-Richtung (s. Koordinatensystem in Fig. 1) geteilt. Dadurch und zusätzlich durch ein äußeres Justagesystem, mit dem der Leitkörper in X-Y-Richtung, bei Bedarf auch in Z-Richtung zur Lage des Düsenschlitzes justiert werden kann, werden gleiche Glasfilmdicken gewährleistet. Möglichst gleiche Glasfilmdicken sind notwendig, um kleine Warp-Werte sicherzustellen.

Zusätzlich kann die Geradheit des Leitkörpers insbesondere für große Bandbreiten und lange Prozeßzeiten durch das Anlegen einer Zugkraft in X-Richtung sichergestellt werden. Damit können große Bandbreiten mit langer Fertigungsdauer hergestellt werden, was die Produktivität wiederum entscheidend verbessert.

Unterhalb der Schlitzdüse schließt sich der Düsenofen an. Der Leitkörper ragt vorzugsweise in den Düsenofen hinein. Der Düsenofen verfügt vorzugsweise über eine Beheizungseinrichtung und über zwei Kühlsysteme.

Zur definierten Einstellung der Verweildauer des Glasfilms am Leitkörper kann der Leitkörper direkt beheizt und gekühlt werden. Hierzu weist der Leitkörper eine vorzugsweise Heizeinrichtung und/oder Kühleinrichtung auf. Zusätzlich können die Glasfilme beidseitig durch die segmentierte Beheizungseinrichtung des Düsenofens beheizt werden.

Der Düsenofen weist im Bereich des Leitkörpers vorzugsweise gegenüberliegende Strahlplatten auf.

Gemäß einer weiteren Ausführungsform weist der Düsenofen unterhalb der Strahlplatten mindestens eine in den Ofenschacht verschiebbare Schotte auf.

Durch die Ausbildung einer kleinen Ziehzwiebel wird dem Glas direkt unterhalb des Leitkörpers durch zwei Kühlsysteme, eine Hauptkühlung und eine segmetierte Kühlung unterhalb der Hauptkühlung, Wärme entzogen. Dabei führt die Hauptkühlung den wesentlichen Anteil der Wärmemenge ab. Die in X-Richtung fein segmentierte Kühlung stellt die Korrektur geringer Dickenschwankungen verursacht durch das Düsensystem sicher.

Das Glasband wird vertikal nach unten und ggf. quer zur Bandrichtung verstreckt. Die dazu notwendigen Ziehwalzen und Warprollen befinden sich unterhalb des Düsenofens gegebenenfalls im Walzenofen, im Ziehschacht oder in der Ziehmaschine.

Die Ziehwalzen dienen zur Einstellung der Dicke. Mit den Warprollen wird die notwendige Planität des Glasbandes und der späteren Glasscheiben sichergestellt.

Vorzugsweise wird das Glasband beim Anfahrprozeß mit Ziehwalzen unter dem Düsenofen angezogen. Dadurch wird die Dauer des Anfahrens deutlich verringert.

Der Düsenofen kann zur Vereinfachung des Anfahrprozesses quer zur Bandrichtung geöffnet werden. Der Anfahrprozeß wird somit erleichtert.

Auch der Walzenofen kann zur Vereinfachung des Anfahrprozesses quer zur Bandrichtung geöffnet werden.

Der Ziehschacht kann zur Vereinfachung des Anfahrprozesses nach unten oder seitlich ausgefahren werden. Während der Produktion wird der Ziehschacht von unten an den Walzenofen angedockt. Der Anfahrprozeß wird somit ebenfalls erleichtert.

Beispielhafte Ausführungsformen der Erfindung werden nachfolgend anhand der Zeichnungen näher erläutert. Es zeigen:

Fig. 1    einen Vertikalschnitt durch die Vorrichtung und

Fig. 2    einen Vertikalschnitt durch den Bereich der Schlitzdüse in vergrößerter Darstellung.

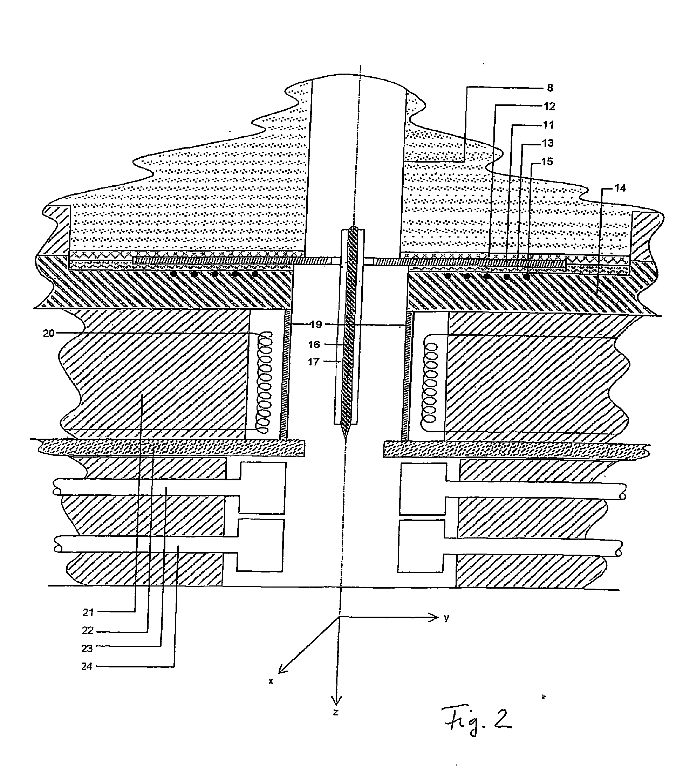

In den Fign. 1 und 2 ist ein Koordinatensystem zur Festlegung der Raumrichtungen eingezeichnet. Hierbei bedeuten die X-Richtung die Richtung der Glasbandbreite, die Y-Richtung die Richtung senkrecht zur idealen Bandoberfläche (Glasbanddicke) und die Z-Richtung die Richtung in Ziehrichtung.

In der Fig. 1 ist die Vorrichtung im Vertikalschnitt mit den Abschnitten Zulauf 1, Ziehtank 6, Düsenofen 18, Walzenofen 25 und Ziehschacht 32 schematisch dargestellt.

Durch den Zulauf 1 wird die Glasschmelze aus einem nicht dargestellten Homogenisierungssystem in den Ziehtank 6 eingespeist. Der Zulauf 1 besteht aus einem in vertikaler Richtung angeordneten Rohr 2. Das Rohr 2 besteht aus einer Platinlegierung oder aus ff-Material, das symmetrisch direkt oder indirekt beheizte oder gekühlte Rohrabschnitte 2a, b, c aufweist und segmentiert ist. Entsprechend den Rohrabschnitten 2a, b, c ist eine entsprechend segmentierte Beheizungseinrichtung 3 und eine segmentierte Kühleinrichtung 4 vorgesehen, die über eine Isolierung 5 gegenüber der Umgebung abgeschirmt sind. Die Beheizung 3 erfolgt durch eine direkte oder indirekte elektrische Beheizung. Die Kühleinrichtung 4 besteht aus Kühlrohren, durch das ein Kühlmedium geleitet wird. Die Kühlrohre umgreifen die Segmente des Rohres 2 und sind an entsprechende Kühlaggregate angeschlossen.

Der sich nach unten an die Zulaufrinne 1 anschließende Ziehtank 6 weist einen Glasverteiler 7 aus einer Platinlegierung auf, der vertikal nach unten in die Glaszuführung 8 übergeht, die ebenfalls aus einer Platinlegierung besteht. Der Glasverteiler 7 dient zur Verteilung der Glasschmelze über die gesamte Länge der Schlitzdüse 11, die noch im einzelnen beschrieben wird. Der Ziehtank 6 besitzt ein ebenfalls in vertikaler Richtung und in Querrichtung segmentiertes Beheizungssystem 9. Die Beheizung kann direkt oder indirekt als elektrische Beheizung ausgeführt sein. Außen ist der Ziehtank 6 mit einer Isolierung 10 umgeben.

An der Unterseite des Ziehtanks 6 befindet sich das Düsensystem mit der Schlitzdüse 11, den Dichtungen 12 und 13 und dem Leitkörper 16. Die Schlitzdüse und der Leitkörper bestehen aus einer Platinlegierung. Die Schlitzdüse 11 wird durch die Düsenhalterung 14 von unten gegen den Ziehtank 6 gepreßt. Die Dichtung 12 und die flexible Dichtung 13 gewährleisten den Kraft- und Formschluß.

Die Schlitzdüse 11 wird elektrisch mittels der in der Düsenhalterung 14 angeordneten Heizung 15 direkt oder indirekt beheizt. Zur Optimierung der Glasströmung kann bei Bedarf oberhalb der Schlitzdüse 11 eine weitere Schlitzdüse aus einer Platinlegierung angeordnet sein (nicht abgebildet).

In der Schlitzdüse 11 ist, wie in der Fig. 2 dargestellt ist, ein Leitkörper 16 aus einer Platinlegierung angeordnet, der aus einem plattenförmigen Element besteht, das am unteren Ende spitz zuläuft. Der Leitkörper 16 hat gegebenenfalls eine Seitenbegrenzung 17 und ist in X-, Y-, Z-Richtung justierbar angeordnet, was in den Fign. 1 und 2 nicht dargestellt ist. Der Leitkörper 16 verfügt ferner über eine direkte elektrische Beheizung, gegebenenfalls auch über eine Kühleinrichtung.

Die beiden Glasfilme, die aus der Schlitzdüse 11 an den Außenseiten des Leitkörpers 16 vertikal nach unten fließen, vereinigen sich an dem spitz zulaufenden unteren Ende zu einem gemeinsamen Glasband. Die Glasfilme auf dem Leitkörper, die Ziehzwiebel und der Verstreckungsbereich des Glasbandes befinden sich zwischen den Strahlplatten 19 des Düsenofens 18, der im oberen Teil über eine elektrische Beheizung 20 und im unteren Teil über Kühlsysteme 23 und 24 verfügt. Die Strahlplatten 19 schirmen die Beheizung zur Verbesserung der Temperaturhomogenität vom Glasband ab.

Mit einer in Y-Richtung beweglichen Schotte 22 in Höhe der Ziehzwiebel kann die Abfuhr der Wärme aus dem Glasband durch die Kühlsysteme 23,24 reguliert werden. Unterhalb der Schotte 22 befindet sich die Hauptkühlung 23 zur Einstellung der Temperatur des Glasbandes im Bereich der Ziehzwiebel. Das in X-Richtung segmentierte Kühlsystem 24 dient zur Einstellung der Dickenverteilung in Querrichtung des Glasbandes. Der Düsenofen 18 ist nach außen mittels der Isolierung 21 isoliert. Zur Erleichterung des Anfahrprozesses kann der Düsenofen gegebenenfalls in Y-Richtung geöffnet werden.

Unterhalb des Düsenofens 18 befindet sich der Walzenofen 25 mit Walzenschacht 26. Der Walzenofen 25 verfügt über eine in X- und Z-Richtung segmentierte, elektrische Heizeinrichtung 27 und über eine in X- und Z-Richtung segmentierte Kühleinrichtung 28. Zur Verbesserung der Temperaturhomogenität schirmt der Walzenschacht 26 die Heizeinrichtung vom Glasband ab. Im Walzenofen 25 sind die Warprollen 29 angeordnet, die durch Schrägstellung oder eine spezielle Profilierung das Glasband in X-Richtung zur Einstellung der geforderten Ebenheit verstrecken. Im Walzenofen 25 befinden sich außerdem ein oder mehrere Ziehwalzenpaare 30, die das Band in Z-Richtung zur Einstellung der geforderten Dicke definiert verstrecken. Der Walzenofen 25 ist nach außen mittels der Isolierung 31 isoliert. Zur Erleichterung des Anfahrprozesses kann der Walzenofen 25 gegebenenfalls in Y-Richtung geöffnet werden.

Unterhalb des Walzenofens 25 befindet sich der Ziehschacht 32. Der Ziehschacht 32 verfügt über eine in X- und Z-Richtung segmentierte, elektrische Beheizung 35 und über eine in X- und Z-Richtung segmentierte Kühleinrichtung 36. Zur Verbesserung der Temperaturhomogenität schirmt der Strahlschacht 33 die Beheizung 35 vom Glasband ab. Zur Unterbindung undefinierter Konvektion befinden sich im Strahlschacht bewegliche Schotten 34. Gegebenenfalls sind im Ziehschacht 32 Stabilisierungsrollen 37 angeordnet, die die Position des Glasbandes in Y-Richtung stabilisieren. Der Ziehschacht 32 ist nach außen isoliert (Isolierung 38).

Zur Erleichterung des Anfahrprozesses kann der Ziehschacht 32 gegebenenfalls in Y-Richtung geöffnet werden oder stirnseitig angeordnete Türen können geöffnet werden. Außerdem wird der Ziehschacht 32 zur Erleichterung der Rüstvorgänge nach unten ausgefahren. Zur Produktion wird der Ziehschacht 32 von unten an den Walzenofen 25 angedockt.

Der Walzenofen 25 kann auch entfallen. Bei nichtvorhandenem Walzenofen befinden sich die Warprollen 29 oder die Ziehwalzen 30 gegebenenfalls im Ziehschacht 32. Bei geringen Wanddicken, d.h. bei kleinem Bandgewicht und kleinen Ziehkräften können bei kurzen Ziehschächten 32 die Ziehwalzen 30 und die Stabilisierungsrollen 37 im Ziehschacht entfallen. Dann befinden sich die Ziehwalzen 30 unter dem Ziehschacht 32.

Alle Beheizungssysteme werden elektrisch betrieben. Die Kühlsysteme werden mittels durchfließender Flüssigkeiten oder gasförmiger Medien gekühlt.

Nachfolgend wird ein Beispiel für die Herstellung von Substratglas für TFT-Displays beschrieben.

**Glas:**

Alkalifreies Borosilikat-Glas mit Tg > 700°C, Dichte < 2,5 g/cm$^3$ und thermischer Ausdehnung < 37 x 10$^{-7}$/K

**Qualitätsmerkmale bezüglich der Geometrie:**

| | |
|---|---|
| - Länge: | 670 mm |
| - Breite: | 590 mm |
| - Dicke: | 0,7 mm |
| - Dickenverteilung: | < 0,025 mm |
| - Warp: | < 0,5 mm |
| - Waviness: | < 50 nm |

**Prozeßführung:**

**Zulauf:**

Die Glastemperaturen im Zulauf werden zwischen Tg+670 K und Tg+590 K (entlang des Zulaufs monoton fallend) eingestellt. Der Gesamtdurchsatz beträgt dann 2,8 kg/min.

**Ziehtank, Düsensystem und Beheizung Düsenofen:**

Die Glastemperaturen im Ziehtank 6 werden zwischen Tg+590 K und Tg+570 K, die Glastemperaturen an der Schlitzdüse 11 zwischen Tg+570 K und Tg+550 K und am Leitkörper 16 zwischen Tg+560 K und Tg+540 K eingestellt. Damit ergibt sich ein homogener Liniendurchsatz quer zum Glasband von 3,5 g/(min x mm). Die Dicke der Glasfilme auf dem Leitkörper 16 beträgt jeweils 8 mm. Bei einer Schlitzbreite (Abstand zwischen Schlitzdüse 11 und Leitkörper 16) von jeweils 10 mm benetzen die Glasfilme auf den Leitkörper 16 somit nicht die Unterseite der Schlitzdüse 11.

## Kühlung Düsenofen und Walzenofen:

Die Hauptkühleinrichtung 23 (Kühlmedium Wasser) kühlt das Glas im Ziehzwiebelbereich auf ca. Tg+290 K ab. Dabei wird das Glas durch die Ziehwalzen 30 des Walzenofens 25 mit einer Ziehgeschwindigkeit von 1,6 m/min verstreckt, so daß ein Glasband mit einer Bruttobreite von 800 mm und einer Dicke von 0,7 mm entsteht. Die segmentierte Kühleinrichtung 23, 24 (Kühlmedium Wasser/Luft) wird so eingestellt, daß die geforderte Dickenverteilung sicher erreicht wird. Mit der segmentierten Heizung und Kühlung des Walzenofens 25 wird das Glasband homogen auf Tg + 140 K abgekühlt.

## Ziehschacht:

Mit der segmentierten Heizung und Kühlung des Ziehschachtes 32 wird das Glasband in der ersten Schnellkühlzone auf Tg+50 K abgekühlt, dann in der Feinkühlzone zur Einstellung der permanenten Kühlkörperspannungen auf Tg-50 K feingekühlt und dann in der zweiten Schnellkühlzone B rasch auf 450 K abgekühlt. Im Ziehschacht 32 und unterhalb des Ziehschachtes befinden sich weitere Walzen, die die Position des Glasbandes im und unterhalb des Ziehschachtes 32 stabilisieren. Nach dem Austemperieren und Ablängen werden die Anforderungen an den Warp erreicht.

## Bezugszeichen

| | |
|---|---|
| 1 | Zulauf |
| 2 | Rohr |
| 2a,b,c | Rohrabschnitt |
| 3 | Beheizungseinrichtung |
| 4 | Kühleinrichtung |
| 5 | Isolierung |
| 6 | Ziehtank |
| 7 | Glasverteiler |
| 8 | Glaszuführung |
| 9 | Beheizungssystem |
| 10 | Isolierung |
| 11 | Schlitzdüse |
| 12 | Dichtung |
| 13 | flexible Dichtung |
| 14 | Düsenhalterung |
| 15 | Heizung |
| 16 | Leitkörper |
| 17 | Seitenbegrenzung |
| 18 | Düsenofen |
| 19 | Strahlplatten |
| 20 | Beheizung |
| 21 | Isolierung |
| 22 | Schotte |
| 23 | Hauptkühlung |
| 24 | segmentiertes Kühlsystem |
| 25 | Walzenofen |
| 26 | Walzenschacht |
| 27 | Heizeinrichtung |
| 28 | Kühleinrichtung |
| 29 | Warprollen |
| 30 | Ziehwalzen |

| 31 | Isolierung |
|---|---|
| 32 | Ziehschacht |
| 33 | Strahlschacht |
| 34 | Schotte |
| 35 | Beheizung |
| 36 | Kühleinrichtung |
| 37 | Stabilisierungsrollen |
| 38 | Isolierung |

**Patentansprüche**

1. Verfahren zum Herstellen von dünnen Glasscheiben durch Ziehen eines dünnen Glasbandes vertikal nach unten, bei dem aus einer Schmelzwanne über einen Zulauf eine Glasschmelze einem Ziehtank mit einem mindestens eine Schlitzdüse aufweisenden Düsensystem zugeführt wird, **dadurch gekennzeichnet,**
   **dass** der Gesamtdurchsatz durch die Länge und den Querschnitt des vertikalen Zulaufs sowie durch eine definierte Beheizung und Kühlung des vertikalen Zulaufs über die Viskosität der im Zulauf befindlichen Glasschmelze derart eingestellt ist, dass der Druck der Glasschmelze, der durch den Niveauunterschied zwischen der Höhe der freien Oberfläche der Glasschmelze und der Höhe des Düsensystems entsteht, im Wesentlichen im vertikalen Zulauf abfällt,
   **dass** der Durchsatz pro Längeneinheit in Querrichtung des Glasbandes (so genannter Liniendurchsatz) durch die Geometrie des Düsensystems sowie durch eine definierte Beheizung und Kühlung des Ziehtanks und der Schlitzdüse über die Viskosität der im Düsensystem befindlichen Glasschmelze eingestellt wird,
   so dass das Glas beim Austritt aus dem Düsensystem die Unterseite der Schlitzdüse im Bereich der Abrisskante nicht benetzt.

2. Verfahren nach Anspruch 1, **dadurch gekennzeichnet, dass** die Temperatur der Glasschmelze in der Zulaufrinne auf $T_{ZR1}$ = Tg+670 K bis $T_{ZR2}$ = Tg+590 K eingestellt wird.

3. Verfahren nach Anspruch 1 oder 2, **dadurch gekennzeichnet, dass** die Temperatur der Glasschmelze im Ziehtank auf $T_{ZT1}$ = Tg+590 K bis $T_{ZT2}$ = Tg+570 K eingestellt wird.

4. Verfahren nach einem der Ansprüche 1 bis 3, **dadurch gekennzeichnet, dass** die Temperatur $T_{SD}$ der Glasschmelze im Bereich der Schlitzdüse auf $T_{SD1}$ = Tg+570 K bis = Tg+550 K eingestellt wird.

5. Verfahren nach einem der Ansprüche 1 bis 4, **dadurch gekennzeichnet, dass** die Temperaturabweichung $\Delta T_{SD}$ der Glasschmelze längs der Schlitzdüse auf $\Delta T_{SD} \leq 20$ K eingestellt wird.

6. Verfahren nach einem der Ansprüche 1 bis 5, **dadurch gekennzeichnet, dass** der Glasschmelzefluß beim Durchlauf durch die Schlitzdüse mittels mindestens eines Leitkörpers geteilt wird, wobei die Glasschmelze beidseitig als Glasfilm den Leitkörper herunterläuft und sich am unteren Ende des Leitkörpers zu einem Glasband vereinigt.

7. Verfahren nach Anspruch 6, **dadurch gekennzeichnet, dass** die Verweilzeit und die Viskosität der Glasfilme auf dem Leitkörper derart eingestellt wird, daß Abweichungen von der idealen Oberflächenkontur nahezu vollständig ausheilen.

8. Verfahren nach einem der Ansprüche 6 oder 7, **dadurch gekennzeichnet, dass** die Glasfilme selektiv am Leitkörper geheizt und/oder gekühlt werden.

9. Verfahren nach einem der Ansprüche 6 bis 8, **dadurch gekennzeichnet, dass** die Glasfilme an ihren Seitenrändern seitlich geführt werden.

10. Verfahren nach einem der Ansprüche 6 bis 9, **dadurch gekennzeichnet, dass** das Glasband im Bereich seiner Ziehzwiebel selektiv gekühlt wird.

11. Verfahren nach einem der Ansprüche 1 bis 10, **dadurch gekennzeichnet, dass** mindestens ein Teil des Gewichtes des Glasbandes beim Ziehen kompensiert wird.

**12.** Verfahrens nach einem der Ansprüche 1 bis 11, **dadurch gekennzeichnet, dass** die Dicke des Glasbandes kontinuierlich gemessen wird und daß mittels der gemessenen Dickenwerte die Ziehgeschwindigkeit gesteuert wird.

**13.** Verfahren nach einem der Ansprüche 1 bis 12, **dadurch gekennzeichnet, dass** das Glasband im viskoselastischen Bereich quer zur Bandrichtung verstreckt wird.

**14.** Verfahren nach einem der Ansprüche 1 bis 13, **dadurch gekennzeichnet, dass** das Glasband im Walzenofen und/oder im Ziehschacht in Bandrichtung und quer zur Bandrichtung selektiv geheizt und/oder gekühlt wird.

**15.** Vorrichtung zum Herstellen von dünnen Glasscheiben, insbesondere von Glasscheiben mit einer Dicke unter 1 mm, mit einer Schmelzwanne, einem Homogenisierungssystem, einem Zulauf und einem Ziehtank, wobei der Ziehtank ein Düsensystem mit mindestens einer Schlitzdüse aufweist, **dadurch gekennzeichnet,**
**dass** der Zulauf (1), der Ziehtank (6) und das Düsensystem ein geschlossenes System bilden, bei dem der Druck der Glasschmelze, der durch den Niveauunterschied zwischen der Höhe der freien Oberfläche der Glasschmelze und der Höhe des Düsensystems entsteht, im wesentlichen im Zulauf abfällt,
**dass** der Zulauf als vertikal angeordnetes Rohr (2) mit segmentierten Rohrabschnitten (2a, b, c) ausgebildet ist, wobei das Rohr (2) eine Länge von 2 bis 5 m und einen Querschnitt von 50 mm bis 80 mm aufweist, wobei der Rohrquerschnitt eine Kreisform aufweist,
**dass** der Zulauf (1) eine segmentierte Beheizungs- und Kühleinrichtung (3, 4) aufweist und
**dass** der Ziehtank (6) ein in vertikaler Richtung und in Querrichtung segmentiertes Beheizungssystem (9) aufweist.

**16.** Vorrichtung nach Anspruch 15, **dadurch gekennzeichnet, dass** die Schlitzdüse (11) eine Heizung (15) aufweist.

**17.** Vorrichtung nach einem der Ansprüche 15 oder 16, **dadurch gekennzeichnet, dass** in der Schlitzdüse (11) mindestens ein Leitkörper (16) vertikal angeordnet ist.

**18.** Vorrichtung nach einem der Ansprüche 15 bis 17, **dadurch gekennzeichnet, dass** der Leitkörper (16) eine nach unten spitz zulaufende Platte aus einer Platinlegierung ist.

**19.** Vorrichtung nach einem der Ansprüche 15 bis 18, **dadurch gekennzeichnet, dass** der Leitkörper (16) nach oben über die Schlitzdüse (11) hinausragt.

**20.** Vorrichtung nach einem der Ansprüche 15 bis 19, **dadurch gekennzeichnet, dass** der Leitkörper (16) Seitenbegrenzungen (17) aufweist.

**21.** Vorrichtung nach einem der Ansprüche 15 bis 20, **dadurch gekennzeichnet, dass** der Leitkörper (16) in X-, Y- und Z-Richtung justierbar ist.

**22.** Vorrichtung nach einem der Ansprüche 15 bis 21, **dadurch gekennzeichnet, dass** der Leitkörper (16) durch Anlegen einer Zugkraft in X-Richtung streckbar ist.

**23.** Vorrichtung nach einem der Ansprüche 15 bis 22, **dadurch gekennzeichnet, dass** der Leitkörper (16) eine Heizeinrichtung und/oder Kühleinrichtung aufweist.

**24.** Vorrichtung nach einem der Ansprüche 15 bis 23, **dadurch gekennzeichnet, dass** sich unterhalb der Schlitzdüse (11) ein Düsenofen (18) mit segmentierter Heiz- und Kühleinrichtung (20,23,24) anschließt.

**25.** Vorrichtung nach Anspruch 24, **dadurch gekennzeichnet, dass** der Düsenofen (18) an den dem Leitkörper (16) gegenüberliegenden Flächen Strahlplatten (19) aufweist.

**26.** Vorrichtung nach einem der Ansprüche 24 oder 25, **dadurch gekennzeichnet, dass** der Düsenofen (18) unterhalb der Strahlplatten (19) mindestens eine verschiebbare Schotte (22) aufweist.

**27.** Vorrichtung nach einem der Ansprüche 24 bis 26, **dadurch gekennzeichnet, dass** der Düsenofen (18) Mittel zum Öffnen quer zur Bandrichtung aufweist.

**28.** Vorrichtung nach einem der Ansprüche 24 bis 27, **dadurch gekennzeichnet, dass** sich unterhalb des Düsenofens (18) ein Walzenofen (25) mit Walzenschacht (26) anschließt, der eine in X-und Z-Richtung segmentierte Heiz- und Kühleinrichtung (27,28) aufweist.

29. Vorrichtung nach Anspruch 28, **dadurch gekennzeichnet,** das im Walzenschacht (41) mindestens ein Warprollenpaar (29) und/oder Ziehrollenpaar (30) angeordnet ist.

30. Vorrichtung nach einem der Ansprüche 28 oder 29, **dadurch gekennzeichnet, dass** der Walzenofen (25) Mittel zum Öffnen quer zur Bandrichtung aufweist.

31. Vorrichtung nach einem der Ansprüche 29 bis 30, **dadurch gekennzeichnet, dass** die Ziehgeschwindigkeit des Ziehrollenpaars (30) entsprechend der online gemessenen Dicke des Glasbandes regelbar ist.

32. Vorrichtung nach einem der Ansprüche 15 bis 31, **dadurch gekennzeichnet, dass** ein unterhalb des Walzenofens (25) angeordneter Ziehschacht (32) nach unten oder seitlich aus- und einfahrbar ist.

**Claims**

1. Method for producing thin glass panes by drawing a thin ribbon of glass vertically downwards, in which method a glass melt is fed from a melting end via a feed to a drawing tank with a nozzle system having at least one slotted nozzle, **characterized in that** the overall throughput is set by the length and cross section of the vertical feed and by a defined heating and cooling of the vertical feed by way of the viscosity of the glass melt located in the feed in such a way that the pressure of the glass melt obtained by the difference in level between the height of the free surface of the glass melt and the height of the nozzle system drops substantially in the vertical feed, and **in that** the throughput per unit length in the transverse direction of the ribbon of glass (known as the line throughput) is set by the geometry of the nozzle system and by a defined heating and cooling of the drawing tank and of the slotted nozzle by way of the viscosity of the glass melt located in the nozzle system, so that, when it leaves the nozzle system, the glass does not wet the underside of the slotted nozzle in the region of the break-away edge.

2. Method according to Claim 1, **characterized in that** the temperature of the glass melt in the feed channel is set to $T_{ZR1}$ = Tg+670 K to $T_{ZR2}$ = Tg+590 K.

3. Method according to Claim 1 or 2, **characterized in that** the temperature of the glass melt in the drawing tank is set to $T_{ZR1}$ = Tg+590 K to $T_{ZR2}$ = Tg+570 K.

4. Method according to one of Claims 1 to 3, **characterized in that** the temperature $T_{SD}$ of the glass melt in the region of the slotted nozzle is set to $T_{SD1}$ = Tg+570 K to = Tg+550 K.

5. Method according to one of Claims 1 to 4, **characterized in that** the temperature deviation $\Delta T_{SD}$ of the glass melt along the slotted nozzle is set to $\Delta T_{SD} \leq 20$ K.

6. Method according to one of Claims 1 to 5, **characterized in that**, when it passes through the slotted nozzle, the glass melt flow is divided by means of at least one draw bar, the glass melt running down on both sides of the draw bar as a glass film and coming together at the lower end of the draw bar to form a ribbon of glass.

7. Method according to Claim 6, **characterized in that** the dwell time and the viscosity of the glass films on the draw bar are set in such a way that deviations from the ideal surface contour are eliminated virtually completely.

8. Method according to either of Claims 6 and 7, **characterized in that** the glass films are selectively heated and/or cooled on the draw bar.

9. Method according to one of Claims 6 to 8, **characterized in that** the glass films are laterally guided at their side edges.

10. Method according to one of Claims 6 to 9, **characterized in that** the ribbon of glass is selectively cooled in the region of its drawing onion.

11. Method according to one of Claims 1 to 10, **characterized in that** at least part of the weight of the ribbon of glass is compensated during the drawing.

**12.** Method according to one of Claims 1 to 11, **characterized in that** the thickness of the ribbon of glass is continuously measured and **in that** the drawing rate is controlled by means of the measured thickness values.

**13.** Method according to one of Claims 1 to 12, **characterized in that** the ribbon of glass is stretched transversely to the direction of the ribbon in the viscoelastic region.

**14.** Method according to one of Claims 1 to 13, **characterized in that** the ribbon of glass is selectively heated and/or cooled in the direction of the ribbon and transversely to the direction of the ribbon in the rolling furnace and/or in the drawing kiln.

**15.** Device for producing thin glass panes, in particular glass panes with a thickness of below 1 mm, with a melting end, a homogenizing system, a feed and a drawing tank, the drawing tank having a nozzle system with at least one slotted nozzle, **characterized in that** the feed (1), the drawing tank (6) and the nozzle system form a closed system in which the pressure of the glass melt that is obtained by the difference in level between the height of the free surface of the glass melt and the height of the nozzle system drops substantially in the feed, **in that** the feed is formed as a vertically arranged tube (2) with segmented tube sections (2a, b, c), the tube (2) having a length of from 2 to 5 m and a cross section of from 50 mm to 80 mm, the tube cross section having a circular form, **in that** the feed (1) has a segmented heating and cooling device (3, 4) and **in that** the drawing tank (6) has a heating system (9) segmented in the vertical direction and in the transverse direction.

**16.** Device according to Claim 15, **characterized in that** the slotted nozzle (11) has a heater (15).

**17.** Device according to either of Claims 15 and 16, **characterized in that** at least one draw bar (16) is vertically arranged in the slotted nozzle (11).

**18.** Device according to one of Claims 15 to 17, **characterized in that** the draw bar (16) is a plate made of a platinum alloy that tapers downwards to a point.

**19.** Device according to one of Claims 15 to 18, **characterized in that** the draw bar (16) protrudes upwards beyond the slotted nozzle (11).

**20.** Device according to one of Claims 15 to 19, **characterized in that** the draw bar (16) has side limiters (17).

**21.** Device according to one of Claims 15 to 20, **characterized in that** the draw bar (16) is adjustable in the X, Y and Z directions.

**22.** Device according to one of Claims 15 to 21, **characterized in that** the draw bar (16) can be stretched by applying a tensile force in the X direction.

**23.** Device according to one of Claims 15 to 22, **characterized in that** the draw bar (16) has a heating device and/or cooling device.

**24.** Device according to one of Claims 15 to 23, **characterized in that** a nozzle furnace (18) with a segmented heating and cooling device (20, 23, 24) adjoins underneath the slotted nozzle (11).

**25.** Device according to Claim 24, **characterized in that** the nozzle furnace (18) has jet plates (19) at the surfaces lying opposite the draw bar (16).

**26.** Device according to either of Claims 24 and 25, **characterized in that** the nozzle furnace (18) has underneath the jet plates (19) at least one displaceable dividing wall (22).

**27.** Device according to one of Claims 24 to 26, **characterized in that** the nozzle furnace (18) has means for opening transversely to the direction of the ribbon.

**28.** Device according to one of Claims 24 to 27, **characterized in that** underneath the nozzle furnace (18) there adjoins a rolling furnace (25) with a rolling kiln (26), which has a heating and cooling device (27, 28) segmented in the X and Z directions.

**29.** Device according to Claim 28, **characterized in that** at least one pair of warp rollers (29) and/or pair of drawing rollers (30) is arranged in the rolling kiln (41).

**30.** Device according to either of Claims 28 and 29, **characterized in that** the rolling furnace (25) has means for opening transversely to the direction of the ribbon.

**31.** Device according to either of Claims 29 and 30, **characterized in that** the drawing rate of the pair of drawing rollers (30) can be regulated in accordance with the thickness of the ribbon of glass measured online.

**32.** Device according to one of Claims 15 to 31, **characterized in that** a drawing kiln (32) arranged underneath the rolling furnace (25) can be moved out and in downwards or sidewards.

**Revendications**

**1.** Procédé de fabrication de minces plaques de verre par étirage vertical vers le bas d'une mince bande de verre, dans lequel on amène par une amenée du verre fondu depuis une cuve de fusion jusqu'à une cuve d'étirage qui présente un système de tuyères qui présente au moins une tuyère en fente, **caractérisé en ce que**

le débit total est ajusté par la longueur et la section transversale de l'amenée verticale ainsi que par un chauffage et un refroidissement définis de l'amenée verticale par l'intermédiaire de la viscosité du verre fondu présent dans l'amenée,
**en ce que** la pression du verre fondu qui résulte de la différence de niveau entre la hauteur de la surface libre du verre fondu et la hauteur du système de tuyères diminue essentiellement dans l'amenée verticale,
**en ce que** le débit par unité de longueur dans le sens transversal de la bande de verre (appelé débit linéaire) est ajusté par la géométrie du système de tuyères ainsi que par un chauffage et un refroidissement définis de la cuve d'étirage et de la tuyère en fente, par l'intermédiaire de la viscosité du verre fondu présent dans le système de tuyère,
de telle sorte que lorsqu'il sort du système de tuyères, le verre ne mouille pas le côté inférieur de la tuyère en fente dans la zone du bord de déchirure.

**2.** Procédé selon la revendication 1, **caractérisé en ce que** la température du verre fondu dans la rigole d'amenée est réglée à $T_{ZR1}$ = Tg + 670 K à $T_{ZR2}$ = Tg + 590 K.

**3.** Procédé selon les revendications 1 ou 2, **caractérisé en ce que** la température du verre fondu dans la cuve d'étirage est réglée entre $T_{ZT1}$ = Tg + 590 K à $T_{ZT2}$ = Tg + 570 K.

**4.** Procédé selon l'une des revendications 1 à 3, **caractérisé en ce que** la température $T_{SD}$ du verre fondu dans la zone de la tuyère en fente est réglée entre $T_{SD1}$ = Tg + 570 K à Tg + 550 K.

**5.** Procédé selon l'une des revendications 1 à 4, **caractérisé en ce que** l'écart de température $\Delta T_{SD}$ dans le verre fondu le long de la tuyère en fente est réglé à $\Delta T_{SD} \leq 20$ K.

**6.** Procédé selon l'une des revendications 1 à 5, **caractérisé en ce que** l'écoulement de verre fondu lorsqu'il traverse la tuyère en fente est divisé au moyen d'au moins un corps de guidage, le verre fondu descendant des deux côtés du corps de guidage sous la forme d'un film de verre et se réunissant en une bande de verre à l'extrémité inférieure du corps de guidage.

**7.** Procédé selon la revendication 6, **caractérisé en ce que** le temps de séjour et la viscosité des films de verre sur le corps de guidage sont réglés de manière à ce que les écarts par rapport au contour idéal de la surface se résorbent presque complètement.

**8.** Procédé selon l'une des revendications 6 ou 7, **caractérisé en ce que** les films de verre sont chauffés et/ou refroidis sélectivement sur le corps de guidage.

**9.** Procédé selon l'une des revendications 6 à 8, **caractérisé en ce que** les films de verre sont guidés latéralement sur leurs bords latéraux.

**10.** Procédé selon l'une des revendications 6 à 9, **caractérisé en ce que** la bande de verre est refroidie sélectivement dans la zone de sa peau d'étirage.

**11.** Procédé selon l'une des revendications 1 à 10, **caractérisé en ce qu'**au moins une partie du poids de la bande de verre est compensée lors de l'étirage.

**12.** Procédé selon l'une des revendications 1 à 11, **caractérisé en ce que** l'épaisseur de la bande de verre est mesurée et **en ce que** la vitesse d'étirage est contrôlée au moyen des valeurs d'épaisseur mesurées.

**13.** Procédé selon l'une des revendications 1 à 12, **caractérisé en ce que** la bande de verre est étirée transversalement par rapport à la direction de la bande dans la plage viscoélastique.

**14.** Procédé selon l'une des revendications 1 à 13, **caractérisé en ce que** la bande de verre est chauffée et/ou refroidie sélectivement dans le four à cylindres et/ou dans le puits d'étirage et ce dans la direction de la bande et transversalement par rapport à la direction de la bande.

**15.** Dispositif de fabrication de minces plaques de verre, en particulier de plaques de verre d'une épaisseur inférieure à 1 mm, qui présente une cuve de fusion, un système d'homogénéisation, une amenée et une cuve d'étirage, la cuve d'étirage présentant un système de tuyères qui présente au moins une tuyère en fente, **caractérisé en ce que**

l'amenée (1), la cuve d'étirage (6) et le système d'ajutage forment un système fermé dans lequel la pression du verre fondu qui résulte de la différence de niveau entre la hauteur de la surface libre du verre fondu et la hauteur du système de tuyères diminue essentiellement dans l'amenée,
**en ce que** l'amenée est configurée comme tube (2) disposé à la verticale et doté de tronçons segmentés de tube (2a, b, c), le tube (2) présentant une longueur de 2 à 5 m et une section transversale de 50 mm à 80 mm, la section transversale du tube ayant une forme circulaire,
**en ce que** l'amenée (1) présente un dispositif segmenté de chauffage et de refroidissement (3, 4) et
**en ce que** la cuve d'étirage (6) présente un système de chauffage (9) segmenté dans la direction verticale et dans la direction transversale.

**16.** Dispositif selon la revendication 15, **caractérisé en ce que** la tuyère en fente (11) présente un chauffage (15).

**17.** Dispositif selon l'une des revendications 15 ou 16, **caractérisé en ce qu'**au moins un corps de guidage (16) est disposé verticalement dans la tuyère en fente (11).

**18.** Dispositif selon l'une des revendications 15 à 17, **caractérisé en ce que** le corps de guidage (16) est une plaque en alliage de platine qui converge en pointe vers le bas.

**19.** Dispositif selon l'une des revendications 15 à 18, **caractérisé en ce que** le corps de guidage (16) déborde vers le haut au-delà de la tuyère en fente (11).

**20.** Dispositif selon l'une des revendications 15 à 19, **caractérisé en ce que** le corps de guidage (16) présente des frontières latérales (17).

**21.** Dispositif selon l'une des revendications 15 à 20, **caractérisé en ce que** le corps de guidage (16) peut être ajusté dans la direction X, la direction Y et la direction Z.

**22.** Dispositif selon l'une des revendications 15 à 21, **caractérisé en ce que** le corps de guidage (16) peut être étiré par application d'une force de traction dans la direction X.

**23.** Dispositif selon l'une des revendications 15 à 22, **caractérisé en ce que** le corps de guidage (16) présente un dispositif de chauffage et/ou un dispositif de refroidissement.

**24.** Dispositif selon l'une des revendications 15 à 23, **caractérisé en ce qu'**en dessous de la tuyère en fente (11) se raccorde un four à tuyères (18) qui présente un dispositif segmenté de chauffage et de refroidissement (20, 23, 24).

**25.** Dispositif selon la revendication 24, **caractérisé en ce que** le four à tuyères (18) présente des plaques radiantes (19) sur ses surfaces opposées au corps de guidage (16).

26. Dispositif selon l'une des revendications 24 ou 25, **caractérisé en ce que** le four à tuyères (18) présente au moins une cloison coulissante (22) en dessous des plaques radiantes (19).

27. Dispositif selon l'une des revendications 24 à 26, **caractérisé en ce que** le four à tuyères (18) présente des moyens d'ouverture transversalement par rapport à la direction de la bande.

28. Dispositif selon l'une des revendications 24 à 27, **caractérisé en ce qu'**en dessous du four à tuyères (18) se raccorde un four à cylindres (25) doté d'un puits à cylindres (26) qui présente un dispositif de chauffage et de refroidissement (27, 28) segmenté dans la direction X et dans la direction Z.

29. Dispositif selon la revendication 28, **caractérisé en ce qu'**au moins une paire (29) de rouleaux de déformation et/ou une paire (30) de rouleaux d'étirage est/sont disposée(s) dans le puits à cylindres (41).

30. Dispositif selon l'une des revendications 28 ou 29, **caractérisé en ce que** le four à cylindre (25) présente des moyens d'ouverture transversalement par rapport à la direction de la bande.

31. Dispositif selon l'une des revendications 39 à 30, **caractérisé en ce que** la vitesse d'étirage de la paire (30) de rouleaux d'étirage peut être régulée en fonction de l'épaisseur mesurée en ligne de la bande de verre.

32. Dispositif selon l'une des revendications 15 à 31, **caractérisé en ce qu'**un puits d'étirage (32) disposé en dessous du four à cylindres (25) peut être extrait et enfoncé vers le bas ou latéralement.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3338696 A
- SU 617390
- US 1759229 A
- DE 1596484 B
- JP 2217327 A
- US 1829639 A